# EUROPEAN PATENT APPLICATION

(11) **EP 4 832 208 A1**
(43) Date of publication of application: **28.10.2026**
(21) Application number: 26173621.9
(22) Date of filing: 21.04.2026
(51) Int. Cl.: H01M 50/296, H01M 10/613, H01M 10/653, H01M 10/6551, H01M 10/6556, H01M 10/6567, H01M 50/543

(54) **HIGH VOLTAGE TERMINAL BLOCK DEVICE**

(30) Priority: 22.04.2025 KR 20250052244; 28.08.2025 KR 20250121353
(71) Applicant: SK Innovation Co., Ltd., Seoul 03188 (KR); SK On Co., Ltd., Seoul 03161 (KR)
(72) Inventor: KIM, Se Hyeon, 34124 Daejeon (KR)
(74) Representative: Prüfer & Partner mbB Patentanwälte · Rechtsanwälte

(57) **Abstract**

A high voltage terminal block device according to an embodiment of the present disclosure is installed in a through-hole (120) of a housing (100) of an immersion cooling system and includes a busbar frame (200) disposed inside the housing (100); a fixing part (300) coupled to the busbar frame (200); a conductive fastening part (400) coupled to the fixing part (300) and passing through the through-hole (120); an inner conductive part (500) disposed on the busbar frame (200) to contact a first side of the conductive fastening part (400) and a cell tab (12); an outer conductive part (600) coupled to a second side of the conductive fastening part (400) to protrude outside the housing (100); an insulating injection-molded part (700) surrounding outer circumferences of the conductive fastening part (400) and the outer conductive part (600); and a sealing member (800) sealing between the insulating injection-molded part (700) and an outer wall around the through-hole (120).

## Description

### [BACKGROUND OF THE INVENTION]

### 1. Technical Field

The present disclosure relates to a high voltage terminal block device, and more particularly, to a high voltage terminal block device installed in an immersion cooling system.

### 2. Description of the Related Art

An immersion cooling system is a technology that directly immerses a battery in a cooling fluid to efficiently remove heat from the battery, thereby providing high cooling efficiency. Such an immersion cooling system requires a sealing structure to prevent the cooling fluid from leaking to the outside.

Some sealing structures provide inadequate sealing in an immersion cooling system, or provide unstable electrical connections. Furthermore, some sealing systems may allow a leakage of immersion cooling fluid or may permit fluid or foreign substances to enter the immersion cooling system.

It may be advantageous to provide a sealing structure of a high voltage terminal block, through which an electrical current flows, that provides not only simple sealing but also electrical insulation and electrical connectivity between components simultaneously.

### [SUMMARY OF THE INVENTION]

Embodiments of the present disclosure may provide a high voltage terminal block device, capable of improving stability and performance of an immersion cooling system by enhancing sealing performance and electrical connectivity.

According to an embodiment of the present disclosure, there is provided a high voltage terminal block device installed in a through-hole of a housing of an immersion cooling system, the device comprising: a busbar frame disposed inside the housing; a fixing part coupled to the busbar frame; a conductive fastening part coupled to the fixing part and passing through the through-hole of the housing; an inner conductive part disposed on one surface of the busbar frame to be in surface contact with a first side of the conductive fastening part, and configured to contact a cell tab; an outer conductive part coupled to a second side of the conductive fastening part to protrude to an outside of the housing, and configured to be electrically connected to an external power terminal; an insulating injection-molded part surrounding outer circumferences of the conductive fastening part and the outer conductive part, and inserted and fixed into the through-hole of the housing; and a sealing member disposed between an outer circumferential surface of the insulating injection-molded part and an outer wall around the through-hole of the housing, and configured to seal between the insulating injection-molded part and the outer wall around the through-hole of the housing when the insulating injection-molded part is inserted into the through-hole.

In some non-limiting embodiments, the busbar frame may comprise a fixing rib coupled to an inner wall of the housing; a support plate extending from the fixing rib, coupled to the cell tab, and having an opening configured to expose the cell tab; and an insertion part formed at one side of the support plate, to which the fixing part is coupled.

In some non-limiting embodiments, the fixing rib may be coupled to a receiving groove formed in the inner wall of the housing to support a cell to be spaced apart from a bottom surface of the housing, thereby providing a lower flow path below the cell.

In some non-limiting embodiments, the fixing part may be formed as an insert nut and is fixed to the insertion part of the busbar frame.

In some non-limiting embodiments, the insert nut may have a thread formed on an inner circumferential surface thereof, and be threadedly coupled to the conductive fastening part.

In some non-limiting embodiments, the conductive fastening part may comprise a threaded coupling part having a thread formed on an outer circumferential surface thereof and threadedly coupled to the fixing part; a surface contact part formed continuously from the threaded coupling part and in surface contact with the inner conductive part; and a head part formed continuously from the surface contact part, having a larger diameter than the surface contact part, and coupled to the outer conductive part.

In some non-limiting embodiments, the head part may have a thread formed on an inner circumferential surface thereof, and be threadedly coupled to the outer conductive part.

In some non-limiting embodiments, the inner conductive part may be seated on an upper surface of the busbar frame and be in contact with the surface contact part of the conductive fastening part.

In some non-limiting embodiments, the outer conductive part may comprise an outer busbar bolt and be threadedly coupled to the head part of the conductive fastening part.

In some non-limiting embodiments, the outer busbar bolt may comprise a terminal coupling part protruding to an outside of the housing to be electrically connected to an external power terminal.

In some non-limiting embodiments, the insulating injection-molded part may comprise an insulating body part coupled to the through-hole of the housing and surrounding outer circumferences of the conductive fastening part and the outer conductive part; and an insulating head part formed continuously from the insulating body part, disposed outside the through-hole of the housing, and seated and coupled to an outer wall of the housing.

In some non-limiting embodiments, the insulating body part may have a sealing member coupling part formed on an outer circumferential surface thereof, into which the sealing member is inserted and fixed.

In some non-limiting embodiments, the sealing member may be formed in an O-ring shape and be coupled to the sealing member coupling part of the insulating injection-molded part to seal the insulating injection-molded part against the through-hole of the housing and the outer wall of the housing.

In some non-limiting embodiments, the insulating head part may be in contact with the terminal coupling part of the outer conductive part.

In some non-limiting embodiments, an outer circumference of the inner conductive part may be surrounded by an insulating cover, and the insulating cover may comprise a cover body part formed on an outside of the inner conductive part and having a conductive fastening part insertion hole formed therein; and a side shielding part extending in a vertical direction from both sides of the cover body part and configured to protect side surfaces of the inner conductive part.

In some non-limiting embodiments, the housing may comprise a flow space accommodating a cell module, and the flow space may be filled with an insulating cooling fluid.

In some non-limiting embodiments, the high voltage terminal block device may be installed below a level of the cooling fluid.

In some non-limiting embodiments, a cover part may be coupled to an upper portion of the flow space, a plurality of through-holes may be formed to be spaced apart from each other in a side surface of the housing, and a positive high voltage terminal (+), a negative high voltage terminal (-), and a low voltage terminal may be separately arranged in the respective through-holes.

In some non-limiting embodiments, the housing may comprise a plurality of heat dissipation ribs formed on a lower outer wall thereof to increase a heat dissipation area.

In some non-limiting embodiments, a high voltage terminal block device with improved sealing performance, insulation, and electrical connectivity may be provided.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic diagram illustrating a high voltage terminal block device according to some non-limiting embodiments of the present disclosure.
FIG. 2 is an exploded view illustrating a high voltage terminal block device according to some non-limiting embodiments of the present disclosure.
FIG. 3 is a diagram illustrating an example of an insulating cover in a high voltage terminal block device according to some non-limiting embodiments of the present disclosure.
FIG. 4 is a diagram illustrating high voltage terminals and a low voltage terminal represented on an outside of a housing according to some non-limiting embodiments of the present disclosure.
FIG. 5 is a schematic cross-sectional view taken along line A-A' in the embodiment of FIG. 4 according to some non-limiting embodiments of the present disclosure.

### [DETAILED DESCRIPTION OF THE INVENTION]

Hereinafter, exemplary embodiments of the present disclosure will be described in detail with reference to the accompanying drawing so that those skilled in the art may readily practice the present disclosure. However, since various changes may be made in the embodiments or aspects, the scope of the patent disclosure is not limited or restricted by these embodiments or aspects. It should be understood that all modifications, equivalents, and alternatives for the embodiments or aspects are comprised in the scope of the present disclosure. For example, it is to be understood that the present disclosure may assume various alternative variations and step sequences, except where expressly specified to the contrary. It is also to be understood that the specific devices and processes illustrated in the attached drawings, and described in the following detailed description, are simply exemplary and non-limiting embodiments or aspects of the disclosed subject matter. Hence, specific dimensions and other physical characteristics related to the embodiments or aspects disclosed herein are not to be considered as limiting.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Where only one item is intended, the term "one" or similar language is used. Also, as used herein, the terms "comprise", "comprises", "comprising", "include", "includes", "including", "has", "have", "having", "provide", "provides", "providing", or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments or aspects, refer to a condition for automatically triggering an action (e.g., a specific operation of an electronic device, such as a computing device, a processor, and/or the like).

It will be understood that when a component is described to as being "connected", "combined" or "coupled" to another component, the component may be directly connected or coupled to the other component, but it may be "connected", "combined" or "coupled" to the other component by an intervening other component that may be present.

Also, as used herein, the terms "upper", "lower", "bottom", "side", "lateral", or the like are used with reference to the respective positions or orientations, respectively, shown in the drawings for representing a positional relationship in the given context. Specifically, the terms "upper", "lower", and "bottom" refer to a vertical direction.

Further, in describing the components of the embodiment or aspect, the meaning of "or" may mean each of the components, may mean two or more of the components, or may mean all of the components. For example, it should be understood that the expressions "a, b or c" represent any one of "a," "b," "c," "a and b," "a and c," "b and c," and "a, b and c."

Components comprised in one embodiment or aspect and components comprising common functions will be described using the same names in other embodiments or aspects. The description given in one embodiment or aspect may be applied to other embodiments or aspects, and therefore will not be described in detail within the overlapping range, unless there is a description opposite thereto.

As explained above, some sealing structures provide inadequate sealing in an immersion cooling system, or provide unstable electrical connections. Furthermore, some sealing systems may allow a leakage of immersion cooling fluid or may permit fluid or foreign substances to enter the immersion cooling system. Systems and methods disclosed herein can provide an airtight seal and an insulation that is suitable for an immersion cooling system. Furthermore, systems and methods disclosed herein may provide a stable electrical connection between the elements of a terminal block device and can block a leakage of immersion cooling system inside a housing of the immersion cooling system.

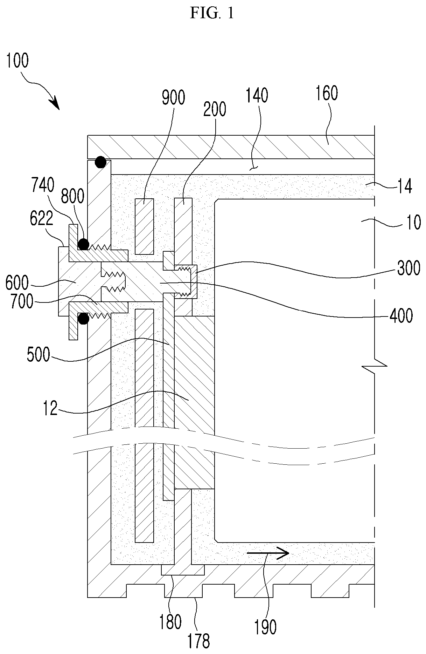

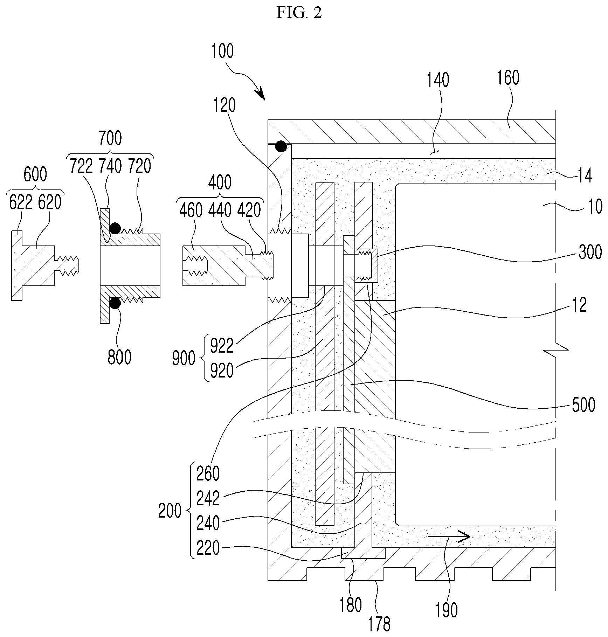

FIG. 1 is a schematic diagram illustrating a high voltage terminal block device according to an embodiment of the present disclosure. FIG. 2 is an exploded view illustrating a high voltage terminal block device according to an embodiment of the present disclosure. FIGs. 1 and 2 may be best understood when described in conjunction with each other.

As illustrated in FIGS. 1 and 2, a high voltage terminal block device according to an embodiment of the present disclosure is inserted and installed in a through-hole 120 of a housing of an immersion cooling system, and may include a busbar frame 200 fixedly disposed inside the housing 100. The high voltage terminal block device may further include a fixing part 300 fixedly installed to the busbar frame 200 and a conductive fastening part 400 fastened to the fixing part 300 in a threaded coupling manner and passing through the through-hole 120 of the housing; an inner conductive part 500 disposed on one surface of the busbar frame 200 to be in surface contact with a first side of the conductive fastening part 400, and contacting a cell tab 12 inside the housing 100. An outer conductive part 600 coupled to a second side of the conductive fastening part 400, protruding to the outside of the housing 100, and electrically connected to an external power terminal. Additionally an insulating injection-molded part 700 surrounding a portion of outer circumferences of the conductive fastening part 400 and the outer conductive part 600, and inserted and fixed into the through-hole 120 of the housing. A sealing member 800 interposed between an outer circumferential surface of the insulating injection-molded part 700 and configured to seal between the insulating injection-molded part 700 and an outer wall of the housing 100 when the insulating injection-molded part 700 is inserted into the through-hole 120 of the housing.

The housing 100 according to an embodiment of the present disclosure forms an overall outer shape of the immersion cooling system. The housing has a flow space 140 formed therein to accommodate a cell module and a cooling fluid 14, and is provided with the through-hole 120 on a side surface thereof into which the high voltage terminal block device is inserted.

In the present embodiment, a basic structure in which the high voltage terminal block device is inserted and installed along a horizontal direction into the through-hole 120 formed in the side surface of the housing 100 will be described. In some example embodiments, the through-hole 120 of the housing may be formed in both the side surface and an upper surface, or only in the upper surface of the housing 100.

The busbar frame 200 according to an embodiment of the present disclosure is disposed inside the housing 100 of the immersion cooling system, and may allow the inner conductive part 500 and the conductive fastening part 400 to be stably fixed and may support them.

In an embodiment, the busbar frame 200 may be formed such that electrical interference or thermal deformation caused by the cooling fluid 14 is minimized. For example, it may be made of a synthetic resin having excellent insulation properties and capable of securing chemical stability with the cooling fluid 14. Such as polyamide, polypropylene, or polycarbonate, may be used.

The busbar frame 200 according to an embodiment may include a fixing rib 220 coupled to an inner wall of the housing 100. Furthermore, the busbar frame 200 may include a support plate 240 extending from the fixing rib 220, coupled to the cell tab 12, and having an opening 242 configured to expose the cell tab 12. The busbar frame 200 may also include an insertion part 260 formed at one side of the support plate 240, to which the fixing part 300 is coupled.

The fixing rib 220 may be coupled to the inner wall of the housing 100 to fix the busbar frame 200, thereby constantly maintaining a relative position between the cell module and the busbar frame 200. According to an embodiment, the fixing rib 220 may be inserted and installed in a receiving groove 180 of the inner wall of the housing 100.

The support plate 240 has a plate-like structure extending from the fixing rib 220, and is coupled to the cell tab 12. In an embodiment, the support plate 240 may have an opening 242 formed therein such that the cell tab 12 is exposed. Accordingly, the support plate 240 may guide or fix a position of the inner conductive part 500 such that the inner conductive part 500 contacts the cell tab 12.

Specifically, the inner conductive part 500 is seated on an upper side of the support plate 240 of the busbar frame 200 such that the cell tab 12 can be stably electrically connected through the conductive fastening part 400 and the inner conductive part 500. For example, the cell tab 12 is exposed to the outside through the opening 242 to be in surface contact with the inner conductive part 500.

The insertion part 260 is formed at one side of the support plate 240, and is a portion to which the fixing part 300(e.g., an insert nut) is coupled. As described, the fixing part 300 may be coupled to the conductive fastening part 400. The insertion part 260 is formed in a shape of a receiving groove or a hole having a constant diameter, and is formed such that the fixing part 300 can be inserted and fixed thereto. Therefore, the conductive fastening part 400 can be stably inserted and fastened to the housing 100.

As such, the busbar frame 200 according to an embodiment of the present disclosure allows the fixing and alignment of the inner conductive part 500 and the conductive fastening part 400 to be stably performed, and can improve electrical contact with the cell tab 12.

According to an embodiment of the present disclosure, the fixing rib 220 may be coupled to a receiving groove 180 formed in an inner wall of the housing 100 to support a cell 10 to be spaced apart from a bottom surface of the housing 100, thereby providing a lower flow path 190 below the cell 10.

According to an embodiment, the receiving groove 180 of the inner wall of the housing 100 is formed in a shape corresponding to an outer shape of the fixing rib 220, and may be integrally formed by an injection molding or cutting process, or may be post-processed. The fixing rib 220 may be inserted into the receiving groove 180 and fixed by adhesion, press-fitting, or a fixing member, whereby a horizontal position and a vertical separation position of the busbar frame 200 are maintained.

In addition, the fixing rib 220 allows the cell 10 to be spaced apart from the bottom surface of the housing 100 at a predetermined distance. That is, the fixing rib 220 secures a predetermined space between a bottom surface of the cell 10 and the bottom surface of the housing 100, thereby providing the lower flow path 190 through which a cooling fluid 14 can flow in a space below the cell 10. The lower flow path 190 provides a path through which the cooling fluid 14 circulates in the immersion cooling system to effectively cool down to the bottom surface of the cell 10, thereby improving heat dissipation performance for the entire cell 10.

As such, the fixing rib 220 according to an embodiment of the present disclosure can stably fix the busbar frame 200 inside the housing 100, and stably support the cell 10 and allow the cooling fluid 14 to circulate smoothly by providing the lower flow path 190 between the cell 10 and the bottom surface of the housing 100.

The fixing part 300 according to an embodiment of the present disclosure is formed as an insert nut, and may be fixedly installed in the insertion part 260 of the busbar frame 200. The fixing part 300 can stably support a position of the conductive fastening part 400 inside the housing 100 when the conductive fastening part 400 is inserted through the through-hole 120 of the housing.

The insert nut according to an embodiment is a metal block or a cylindrical member having a thread formed on an inner circumferential surface thereof, is fixedly installed in the insertion part 260 of the busbar frame 200, and can be threadedly coupled to the conductive fastening part 400.

The insert nut enables high-strength fastening without structurally occupying a large volume, and may be formed of a material having low conductivity and high mechanical durability since it is disposed in an insulating structure through which no current flows. For example, it may be formed of a composite material in which a metal insert is combined inside brass or stainless steel, or a thermosetting plastic.

Since the busbar frame 200 serves to support the inner conductive part 500 electrically connected to the cell tab 12, the insertion part 260 may be formed at a predetermined position of the busbar frame 200. The insertion part 260 is formed as a circular or polygonal opening to correspond to the shape of the insert nut, and may be integrally provided during a molding process or formed by machining. The insert nut may be fixed to the insertion part 260 by a press-fitting method, a welding method, or a molding method.

Accordingly, as the conductive fastening part 400 is inserted into and threadedly coupled to the insert nut, electrical reliability and mechanical stability can be improved, and it can be stably applied even in a high voltage environment.

The conductive fastening part 400 according to an embodiment of the present disclosure is coupled to the fixing part 300 by passing through the through-hole 120 of the housing 100 in a horizontal direction. The conductive fastening part 400 electrically connects the inner conductive part 500 and the outer conductive part 600, and is generally formed in a cylindrical screw structure made of a conductive metal material.

The conductive fastening part 400 according to an embodiment of the present disclosure may include a threaded coupling part 420 having a thread formed on an outer circumferential surface thereof and threadedly coupled to the fixing part 300. Furthermore, the conductive fastening part 400 may include a surface contact part 440 formed continuously from the threaded coupling part 420, which may be a flat shape, and may be in surface contact with the inner conductive part 500. Additionally, the conductive fastening part 400 may include and a head part 460 formed continuously from the surface contact part 440, which may have a larger diameter than the surface contact part 440, and may be coupled to the outer conductive part 600.

In an embodiment, the conductive fastening part 400 includes the threaded coupling part 420 having a thread formed on the outer circumferential surface thereof. The threaded coupling part 420 is located at a first side of the conductive fastening part 400, and may be threadedly coupled to the fixing part 300(e.g., an insert nut). The conductive fastening part 400 may be generally formed of a copper or brass material having excellent electrical conductivity and excellent corrosion resistance.

In an embodiment, the conductive fastening part 400 may include the surface contact part 440 formed continuously from the threaded coupling part 420. The surface contact part 440 contacts a surface of the inner conductive part 500 in a surface contact manner, and thus the conductive fastening part 400 is electrically connected to the inner conductive part 500. The surface contact part 440 is generally processed to have a polished surface without a step, and silver plating or nickel plating treatment may be applied to the surface contact part 440 to minimize contact resistance.

In an embodiment, the conductive fastening part 400 may include the head part 460 formed continuously from the surface contact part 440 and having a larger diameter than the surface contact part 440. The head part 460 is located at a second side of the conductive fastening part 400, and may be coupled to the outer conductive part 600 in a threaded coupling or press-fitting manner. An outer diameter of the head part 460 is larger than that of the surface contact part 440, thereby providing supporting force such that the outer conductive part 600 can be stably fastened.

In addition, a thread may be formed on an inner circumferential surface of the head part 460, and the outer conductive part 600 may be inserted and threadedly coupled thereto. That is, it is matched with an outer circumferential thread of the outer busbar bolt 620 included in the outer conductive part 600, so that a user can fasten it by rotating the outer busbar bolt 620 from the outside.

Since the head part 460 of the conductive fastening part 400 adopts a threaded coupling method, the outer conductive part 600 can be precisely assembled without a separate welding, press-fitting, or soldering process, and can be easily disassembled later during maintenance or separation work.

As such, the conductive fastening part 400 according to an embodiment of the present disclosure can improve mechanical coupling force and electrical contact reliability with the fixing part 300, the inner conductive part 500, and the outer conductive part 600 through the threaded coupling part 420, the surface contact part 440, and the head part 460. Accordingly, a high voltage terminal block having excellent stability of current flow and excellent insulation reliability against high voltage may be provided.

The inner conductive part 500 according to an embodiment of the present disclosure is disposed at an inner side (that is, a direction in which a cell is located) of the conductive fastening part 400, and is disposed to be in surface contact with a first side of the conductive fastening part 400. The inner conductive part 500 is located inside the housing 100 and may directly contact the cell tab 12 to collect or transmit current.

The inner conductive part 500 according to an embodiment may be seated on one surface of the busbar frame 200 to contact the surface contact part 440 of the conductive fastening part 400.

The inner conductive part 500 is in contact with the surface contact part 440 of the conductive fastening part 400, and a corresponding surface thereof may be flat so as to match the flat shape of the surface contact part 440. Therefore, a contact area over the entire surface, rather than a point contact, can be maintained, and contact resistance during current flow can be minimized.

The inner conductive part 500 is seated and fixed on one surface (for example, an upper surface) of the busbar frame 200, and a position thereof may be aligned based on the insertion part 260 integrally disposed on the support plate 240 of the busbar frame 200. While maintaining a relative position between the busbar frame 200 and the inner conductive part 500, the surface contact part 440 of the conductive fastening part 400 is guided to come into close contact with the upper surface of the inner conductive part 500 according to an inward insertion or rotational fastening operation of the conductive fastening part 400.

In addition, the inner conductive part 500 is a conductive member forming an electrical path between the conductive fastening part 400 and the cell tab 12, and may be formed of a metal material having excellent electrical conductivity such as copper, aluminum, or nickel. The inner conductive part 500 has a structure in which an outer circumference thereof is surrounded by an insulating cover 900, which can provide additional insulation reliability.

As such, the inner conductive part 500 according to an embodiment of the present disclosure is formed in a plate shape to form a stable surface contact with the surface contact part 440 of the conductive fastening part 400, thereby minimizing contact resistance and securing electrical conduction reliability, and improving the electrical stability of the high voltage terminal block device.

The outer conductive part 600 according to an embodiment of the present disclosure is coupled to a second side (that is, an outward direction) of the conductive fastening part 400, and is disposed in a structure protruding to the outside of the housing 100. The outer conductive part 600 may generally be electrically connected to an external connector or an external power terminal.

The outer conductive part 600 may include an outer busbar bolt 620 and be threadedly coupled to the head part 460 of the conductive fastening part 400.

The outer busbar bolt 620 may be formed of a metal material having high electrical conductivity, for example, copper, aluminum, or plated stainless steel, and may be formed in a structure engaged with a connection terminal with the external power terminal or a power lead-in terminal.

In an embodiment of the present disclosure, the outer busbar bolt 620 may include a terminal coupling part 622 protruding to the outside of the housing 100 to be electrically connected to the external power terminal.

The terminal coupling part 622 is formed to protrude to the outside of the housing 100 so that a user can directly connect the external power terminal to the high voltage terminal block device.

In addition, the terminal coupling part 622 may have a structure fastened by a nut or a clamp from the outside or coupled to a terminal box or a power connector, and may be formed in various structures such as a thread groove, a wrench groove, or a hexagonal shape.

In addition, the outer busbar bolt 620 may be positioned to be in contact with the insulating head part 740 of the insulating injection-molded part 700 or may be disposed to be inserted into the insulating injection-molded part 700. Accordingly, insulation of the outer busbar bolt 620 from the outside can be secured while stably supporting the outer conductive part 600.

The insulating injection-molded part 700 according to an embodiment of the present disclosure is an insulating resin molded body that surrounds outer circumferences of the conductive fastening part 400 and the outer conductive part 600 and is inserted and fixed into the through-hole 120 of the housing.

The insulating injection-molded part 700 according to an embodiment may include an insulating body part 720 coupled to the through-hole 120 of the housing and surrounding the outer circumferences of the conductive fastening part 400 and the outer conductive part 600. The insulating injection-molded part 700 may further include an insulating head part 740 formed continuously from the insulating body part 720, disposed outside the through-hole 120 of the housing, and seated and coupled to an outer wall of the housing 100.

The insulating injection-molded part 700 may be injection-molded from a resin material having excellent high insulation and heat resistance, such as a thermoplastic resin, a fluorine-based resin, or polyimide, and ensures that airtightness inside and outside the housing 100 is maintained while a high voltage current flows through the conductive fastening part 400 and the outer conductive part 600.

The insulating body part 720 has a cylindrical or square pillar-shaped outer appearance so as to be inserted into the through-hole 120 of the housing, and an inner space surrounding the outer circumferences of the conductive fastening part 400 and the outer conductive part 600 is formed therein. A sealing member coupling part 722 into which the sealing member 800 is inserted and fixed may be formed on an outer circumferential surface of the insulating body part 720.

The sealing member 800 according to an embodiment of the present disclosure is an elastic sealing means such as an O-ring interposed between the outer circumferential surface of the insulating injection-molded part 700 and the outer wall of the housing 100, and is mechanically compressed when the insulating injection-molded part 700 is inserted into the through-hole 120 of the housing to form an airtight structure between an outer wall of the housing 100 and the insulating injection-molded part 700. This is to prevent an external leakage of the cooling fluid 14 and an inflow of external moisture and foreign substances.

The insulating head part 740 is formed continuously from the insulating body part 720, and may contact the outer wall of the housing 100. The insulating head part 740 may serve as a stopper that prevents the insulating body part 720 from being further inserted into the through-hole 120 of the housing. In addition, in an assembled state, it can perform functions of electrical insulation and physical protection by forming a predetermined gap between the outer conductive part 600 and the housing 100. Furthermore, the insulating head part 740 may be formed to contact or be close to the terminal coupling part 622 of the outer conductive part 600.

Therefore, in the insulating injection-molded part 700 according to an embodiment of the present disclosure, the insulating body part 720 and the insulating head part 740 are integrally formed to stably insulate the outer circumferences of the conductive fastening part 400 and the outer conductive part 600 and to provide an airtight seal between the outer conductive part 600, the conductive fastening part 400, and the injection-molded part 700.

The insulating body part 720 surrounds the outer circumferences of the conductive fastening part 400 and the outer conductive part 600 to perform an insulating function, an outer circumferential surface thereof is in contact with an inner wall of the through-hole 120 of the housing, and the insulating head part 740 is positioned to be in contact with an outer wall around the through-hole 120 of the housing. As shown in FIG. 2, the sealing member coupling part 722 to which the sealing member 800 can be coupled may be formed on the outer circumferential surface of the insulating body part 720.

The sealing member coupling part 722 may be formed in a shape of a seating surface or a groove formed on one side of the outer circumferential surface so that the sealing member 800, for example, an O-ring or a packing made of a rubber or silicone material, can be stably fixed within the seating surface or groove. The groove may have a predetermined depth and width, and allows the sealing member 800 to be fixed without falling off during insertion.

The sealing member coupling part 722 is formed in a region of the outer circumferential surface of the insulating body part 720 that is in contact with the outer wall around the through-hole 120 of the housing 100. Therefore as the insulating injection-molded part 700 is coupled to the through-hole 120 of the housing 100, adhesion between the insulating injection-molded part 700 and the outer wall of the housing 100 is improved, thereby blocking a leakage of the immersion cooling fluid 14 inside the housing 100 and an inflow of a fluid or a foreign substance such as external moisture or dust into the housing 100.

As such, the sealing member coupling part 722 according to an embodiment of the present disclosure is formed on the outer circumferential surface of the insulating body part 720 to allow the sealing member 800 to be stably fixed, thereby improving airtightness between the insulating injection-molded part 700 and the outer wall around the through-hole 120 of the housing, and thus a leakage of the internal immersion cooling fluid 14 and a penetration of an external fluid or foreign substance can be prevented.

The insulating head part 740 according to an embodiment of the present disclosure is in contact with the terminal coupling part 622 of the outer conductive part 600, and may prevent the insulating injection-molded part 700 from being separated to the outside based on the force provided by the terminal coupling part 622 on the insulating head part 740.

The insulating head part 740 is integrally formed as an extension of an outer circumferential surface of the insulating body part 720, and is located at an outer end of the insulating injection-molded part 700. The insulating head part 740 may be disposed outside the through-hole 120 of the housing, that is, at a position in contact with an outer wall of the housing 100, to be seated on the outer wall of the housing 100. According to an embodiment, the insulating head part 740 is formed in a disc shape or a flange shape, and has a larger diameter than the insulating body part 720 of the insulating injection-molded part 700 so as to be disposed in a shape covering an outer wall around the through-hole 120 of the housing 100.

In addition, the insulating head part 740 is in contact with the terminal coupling part 622 of the outer conductive part 600, and is fastened from an outer wall direction of the housing 100 together with the head part 460 of the conductive fastening part 400 or the outer busbar bolt 620 coupled to the outer conductive part 600, thereby preventing the insulating injection-molded part 700 from being separated in an outward direction. That is, the insulating head part 740 contacts the terminal coupling part 622 of the outer conductive part 600 to suppress the outward separation of the insulating injection-molded part 700, and at the same time, provides insulation around the outer conductive part 600 to maintain electrical safety.

The insulating head part 740 can therefore improve outer wall contact and insulation reliability of the insulating injection-molded part 700.

The housing 100 according to an embodiment of the present disclosure includes a flow space 140 accommodating a cell module, and the flow space 140 may be filled with an insulating cooling fluid 14. The high voltage terminal block device according to an embodiment may be installed below a level of the cooling fluid 14.

The housing 100 forms an overall outer shape of the immersion cooling system, has the flow space 140 formed therein to accommodate the cell module and the cooling fluid 14, and may be provided with a through-hole 120 into which the high voltage terminal block device is inserted on a side surface thereof.

The flow space 140 provides an accommodation space in which cell modules may be stacked or arranged in parallel, and a shape thereof may be formed in a rectangular or cylindrical shape depending on a shape and dimensions of the cell modules.

The insulating cooling fluid 14 is an insulating fluid filled in the flow space 140 of the housing 100, surrounds an outer circumference of the cell module to provide electrical insulation performance so that dielectric breakdown does not occur even in a high voltage state, and at the same time, can serve as a cooling medium that discharges heat generated during operation of the cell module to the outside.

For example, transformer oil, silicone-based insulating oil, synthetic ester-based insulating oil, or fluorine-based dielectric oil may be used as the cooling fluid 14. The insulating cooling fluid 14 must satisfy electrical insulation properties, heat resistance, chemical stability, and the like, and must be able to be maintained in a stable state for a long time inside the housing 100.

For example, the flow space 140 of the housing 100 is formed such that internal cell modules can be stacked and arranged in a horizontal or vertical direction, and secures a clearance space with the cell modules so that the insulating cooling fluid 14 can sufficiently penetrate. In addition, an internal flow path for inducing a circulating flow of the cooling fluid 14 is formed, or a lower flow path 190 is formed by arranging the cell module spaced apart from a lower portion through the fixing rib 220 or the like, thereby allowing the cooling fluid 14 to circulate smoothly.

The high voltage terminal block device is installed at a position lower than a surface of the insulating cooling fluid 14, that is, a position immersed in the cooling fluid 14, and accordingly, the entire high voltage terminal block device or at least the conductive fastening part 400, the outer conductive part 600, and the like are directly immersed in the cooling fluid 14.

As such, the high voltage terminal block device according to an embodiment of the present disclosure is fixed at a position immersed in the cooling fluid 14, and the cell, the conductive fastening part 400, and the outer conductive part 600 can be continuously cooled by the cooling fluid 14.

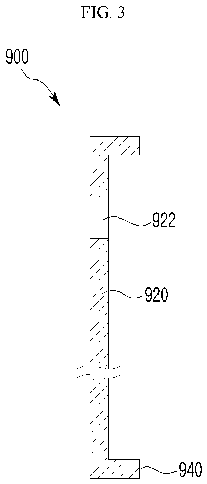

FIG. 3 illustrates an embodiment of the insulating cover 900 in the high voltage terminal block device according to an embodiment of the present disclosure. An outer circumference of the inner conductive part 500 according to an embodiment of the present disclosure may be formed to be surrounded by an insulating cover 900.

According to an embodiment, the insulating cover 900 may include a cover body part 920 formed on an outside of the inner conductive part 500 and having a conductive fastening part insertion hole 922 formed therein. The insulating cover 900 may further include a side shielding part 940 extending in a perpendicular direction from both sides of the cover body part 920 that is configured to protect side surfaces of the inner conductive part 500.

Since the inner conductive part 500 is a metal conductor disposed between the conductive fastening part 400 and the cell tab 12 and is a portion through which a high voltage current flows, an entire outer circumference thereof is surrounded by the insulating cover 900 so as to supplement insulation within an inner space.

The insulating cover 900 according to an embodiment is an insulating member surrounding the outer circumference of the inner conductive part 500, and may be formed of the cover body part 920 or may include the cover body part 920 and the side shielding part 940.

The cover body part 920 is formed on an outer flat surface of the inner conductive part 500, and the conductive fastening part insertion hole 922 is formed such that the conductive fastening part 400 can pass therethrough and be secured. The conductive fastening part insertion hole 922 is processed to correspond to a contact position between the inner conductive part 500 and the conductive fastening part 400, and may be formed with a clearance gap or a selectively open structure so as not to interfere with a surface contact structure between the inner conductive part 500 and the conductive fastening part 400.

The insulating cover 900 may be injection-molded from a resin material having excellent high insulation and heat resistance, such as a thermoplastic resin, a fluorine-based resin, or polyimide.

The side shielding part 940 extends in a perpendicular direction from both side edges of the cover body part 920, and can cover both side surfaces of the inner conductive part 500. Therefore, dielectric breakdown that may occur in a lateral direction can be prevented. The side shielding part 940 may be integrally injection-molded with the cover body part 920, and can simply be seated without fastening to the inner conductive part 500.

As such, the insulating cover 900 according to an embodiment of the present disclosure is formed in a structure covering the inner conductive part 500, thereby improving insulation reliability and securing electrical stability in a high voltage environment.

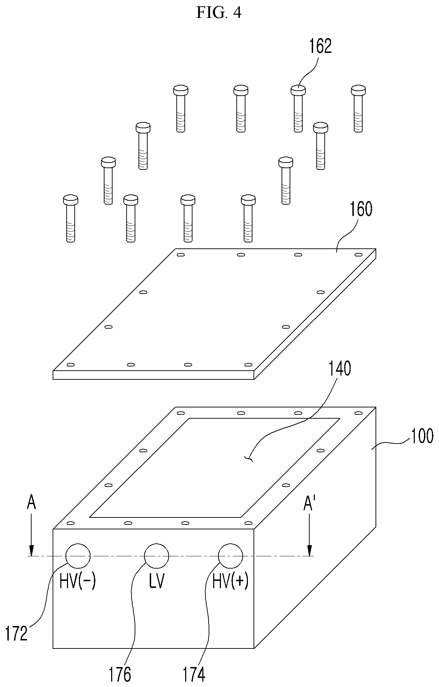

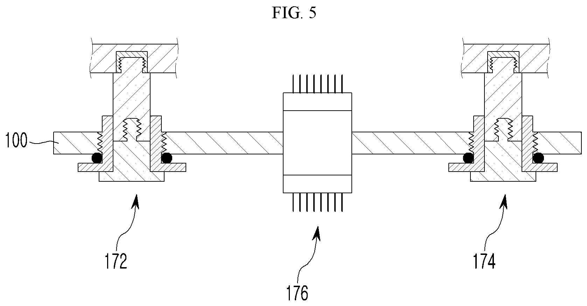

FIG. 4 is a diagram illustrating high voltage terminals and a low voltage terminal represented on an outside of the housing 100 according to an embodiment of the present disclosure. FIG. 5 is a schematic cross-sectional view taken along line A-A' in the embodiment of FIG. 4. FIGs. 4 and 5 may be best understood when described in conjunction with each other.

According to an embodiment of the present disclosure, in the housing 100, a cover part 160 is fastened to an upper portion of the flow space 140, a plurality of through-holes 120 are formed to be spaced apart from each other on a side surface, and a high voltage terminal (-) 172, a high voltage terminal (+) 174, and a low voltage terminal 176 may be arranged separately in the respective through-holes 120.

The housing 100 includes the flow space 140 in which the cell module is accommodated, and the cover part 160 is fastened to an open upper portion of the flow space 140 so that the cell module and the insulating cooling fluid 14 can be maintained in a sealed state. The cover part 160 is fixed to an open upper edge of the housing 100 by a coupling part (e.g., fastening screw 162 coupling, hook coupling, or rib coupling), and may be designed in an openable and closable structure if necessary. The fastening of the cover part 160 may prevent an inflow of external foreign substances and at the same time blocks evaporation or leakage of the internal cooling fluid 14 to maintain airtightness and insulation in the housing 100. An O-ring for sealing may be included between the cover part 160 and the open upper end of the housing 100.

A plurality of through-holes 120 (FIG. 2) for external electrical connection are formed on the side surface of the housing 100. The through-holes 120 are spaced apart at predetermined intervals, and the outer conductive part 600 is coupled to the conductive fastening part 400 (FIGs. 1 and 2) inside the housing 100 through each through-hole 120 to achieve electrical connection with the cell module. The plurality of through-holes 120 are arranged separately for a high voltage terminal (+) 174, a high voltage terminal (-) 172, and a low voltage terminal 176, and these terminals may be disposed separated by appropriate distance intervals from each other in consideration of electrical safety.

In the housing 100 according to an embodiment of the present disclosure, a plurality of heat dissipation ribs 178 (FIGs. 1 and 2) for increasing a heat dissipation area may be formed on a lower outer wall. Here, the heat dissipation ribs 178 may be formed in a structure protruding outward from the lower outer wall of the housing 100. This increases an area in contact with outside air, that is, the heat dissipation area, thereby improving heat emission efficiency.

As such, the high voltage terminal block device according to an embodiment of the present disclosure can provide airtightness and insulation suitable for an immersion cooling system.

That is, it provides a stable electrical connection between the inner conductive part and the outer conductive part, and can block a leakage of the immersion cooling fluid inside the housing and an inflow of a fluid or foreign substances such as external moisture and dust into the inside.

## Claims

1. A high voltage terminal block device configured to be installed in a through-hole (120) of a housing (100) of an immersion cooling system, the high voltage terminal block device comprising:
a busbar frame (200) configured to be disposed inside the housing (100);
a fixing part (300) coupled to the busbar frame (200);
a conductive fastening part (400) coupled to the fixing part (300) and configured to pass through the through-hole (120) of the housing (100);
an inner conductive part (500) disposed on one surface of the busbar frame (200) to be in surface contact with a first side of the conductive fastening part (400), and configured to contact a cell tab (12);
an outer conductive part (600) coupled to a second side of the conductive fastening part (400), configured to protrude to an outside of the housing (100), and configured to be electrically connected to an external power terminal;
an insulating injection-molded part (700) surrounding outer circumferences of the conductive fastening part (400) and the outer conductive part (600), and configured to be inserted and fixed into the through-hole (120) of the housing (100); and
a sealing member (800) configured to be disposed around an outer circumferential surface of the insulating injection-molded part (700), and configured to seal between the insulating injection-molded part (700) and the outer wall around the through-hole (120) of the housing (100) when the insulating injection-molded part (700) is inserted into the through-hole (120).

2. The high voltage terminal block device of claim 1, wherein the busbar frame (200) comprises:
a fixing rib (220) configured to be coupled to an inner wall of the housing (100);
a support plate (240) extending from the fixing rib (220), configured to be coupled to the cell tab (12), and having an opening (242) configured to expose the cell tab (12); and
an insertion part (260) formed at one side of the support plate (240), the fixing part (300) being coupled to the insertion part.

3. The high voltage terminal block device of claim 2, wherein the fixing rib (220) is configured to be coupled to a receiving groove (180) formed in the inner wall of the housing (100) to support a cell (10) to be spaced apart from a bottom surface of the housing (100), thereby providing a lower flow path below the cell (10).

4. The high voltage terminal block device of claim 2 or 3, wherein the fixing part (300) is formed as an insert nut and is fixed to the insertion part (260) of the busbar frame (200), wherein the insert nut has a thread formed on an inner circumferential surface thereof, and is threadedly coupled to the conductive fastening part (400).

5. The high voltage terminal block device of any one of claims 1 to 4, wherein the conductive fastening part (400) comprises:
a threaded coupling part (420) having a thread formed on an outer circumferential surface thereof and threadedly coupled to the fixing part (300);
a surface contact part (440) formed continuously from the threaded coupling part (420) and in surface contact with the inner conductive part (500); and
a head part (460) formed continuously from the surface contact part (440), having a larger diameter than the surface contact part (440), and coupled to the outer conductive part (600).

6. The high voltage terminal block device of claim 5, wherein the inner conductive part (500) is seated on an upper surface of the busbar frame (200) and is in contact with the surface contact part (440) of the conductive fastening part (400).

7. The high voltage terminal block device of claim 5 or 6, wherein the outer conductive part (600) comprises an outer busbar bolt (620) and is threadedly coupled to the head part (460) of the conductive fastening part (400).

8. The high voltage terminal block device of claim 7, wherein the outer busbar bolt (620) comprises a terminal coupling part (622) configured to protrude to an outside of the housing (100) and configured to be electrically connected to an external power terminal.

9. The high voltage terminal block device of any one of the claims 1 to 8, wherein the insulating injection-molded part (700) comprises:
an insulating body part (720) configured to be coupled to the through-hole (120) of the housing (100) and surrounding outer circumferences of the conductive fastening part (400) and the outer conductive part (600), wherein the insulating body part (720) has preferably a sealing member coupling part (722) formed on an outer circumferential surface thereof, into which the sealing member (800) is inserted and fixed; and
an insulating head part (740) formed continuously from the insulating body part (720), configured to be disposed outside the through-hole (120) of the housing (100), and configured to be seated and coupled to an outer wall of the housing (100).

10. The high voltage terminal block device of claim 9, wherein the insulating head part (740) is in contact with the terminal coupling part (622) of the outer conductive part (600).

11. The high voltage terminal block device of any one of claims 1 to 10, wherein an outer circumference of the inner conductive part (500) is surrounded by an insulating cover (900), and
wherein the insulating cover (900) comprises:
a cover body part (920) formed on an outside of the inner conductive part (500) and having a conductive fastening part insertion hole (922) formed therein; and
a side shielding part (940) extending in a vertical direction from both sides of the cover body part (920) and configured to protect side surfaces of the inner conductive part (500).

12. An immersion cooling system configured to cool a battery, the immersion cooling system comprising:
a housing (100) having a through-hole (120); and
a high voltage terminal block device configured to be installed into the through-hole (120), the high voltage terminal block device comprising:
a conductive fastening part (400) configured to be in electrical contact with a cell tab of the cell module when the high voltage terminal block device is installed into the through-hole (120);
an outer conductive part (600) configured to attach to the conductive fastening part (400) and to protrude to an outside of the housing (100) when the high voltage terminal block device is installed into the through-hole (120), the outer conductive part (600) further configured to electrically connect to an external power terminal when the high voltage terminal block device is installed into the through-hole (120); and
an insulating injection-molded part (700) configured to surround outer circumferences of the conductive fastening part (400) and the outer conductive part (600).

13. The immersion cooling system of claim 12, wherein the housing (100) comprises a flow space (140) accommodating a cell module, wherein the flow space (140) is filled with an insulating cooling fluid (14), and wherein the high voltage terminal block device is installed below a level of the cooling fluid (14).

14. The immersion cooling system of claim 13, wherein a cover part (160) is coupled to an upper portion of the flow space (140),
wherein a plurality of through-holes (120) are formed to be spaced apart from each other in a side surface of the housing (100), and
wherein a positive high voltage terminal (+) (174), a negative high voltage terminal (-) (172), and a low voltage terminal (176) are separately arranged in the respective through-holes (120).

15. The immersion cooling system of any one of claims 12 to 14, wherein the housing (100) comprises a plurality of heat dissipation ribs (178) formed on a lower outer wall thereof to increase a heat dissipation area.
